# EUROPÄISCHE PATENTSCHRIFT

(11) **EP 2 404 073 B1**
(45) Veröffentlichungstag und Bekanntmachung des Hinweises auf die Patenterteilung: **13.08.2014**
(21) Anmeldenummer: 10719229.6
(22) Anmeldetag: 02.03.2010
(51) Int. Cl.: F16D 37/02

(54) **VORRICHTUNG FÜR EINE ÜBERTRAGUNG VON DREHMOMENTEN**
TORQUE TRANSFER DEVICE
DISPOSITIF DE TRANSMISSION DE COUPLE

(30) Priorität: 03.03.2009 DE 102009011096; 25.06.2009 DE 102009030639
(43) Veröffentlichungstag der Anmeldung: 11.01.2012
(73) Patentinhaber: Hochschule Ostwestfalen-Lippe, 32657 Lemgo (DE)
(72) Erfinder: MAAS, Jürgen, 32756 Detmold (DE); GÜTH, Dirk, 33104 Paderborn (DE); AUST, Martin, 33142 Büren (DE)
(74) Vertreter: Holland, Ralf
(86) Internationale Anmeldenummer: PCT/DE2010/000230
(87) Internationale Veröffentlichungsnummer: WO 2010/099788

(56) Entgegenhaltungen:
- EP-A2- 0 940 286
- DE-A1- 19 939 356
- DE-C- 927 058
- JP-A- 59 175 636
- US-A- 2 673 631
- US-A- 2 759 580
- US-A- 3 415 346
- US-A- 4 957 644

## Beschreibung

Die Erfindung betrifft eine Vorrichtung für eine Übertragung und/oder Erzeugung von Drehmomenten, mit einer Antriebswelle und mit einer Abtriebswelle, auf die felderregte Kräfte eines magnetorheologischen Mediums einwirken.

Magnetorheologische Fluide, häufig MRF abgekürzt, sind Flüssigkeiten, die vergleichbar Ferrofluiden auf ein Magnetfeld reagieren, sich aber im Gegensatz zu diesen dabei verfestigen. Magnetorheologische Fluide sind Suspensionen von magnetischen Teilchen in der Größenordnung von Mikrometern, die bei einem angelegten Magnetfeld Ketten ausbilden. Dies erhöht die scheinbare Viskosität der magnetorheologischen Flüssigkeiten bis hin zu einer Verfestigung.

Diese physikalischen Eigenschaften der magnetorheologischen Fluiden erlaubt es, insbesondere Drehmomente über angelegte, elektrische Felder gleichsam einstellbar zu übertragen, wie es bspw. aus der US 7,240,485 B2 bekannt ist.

Werden jedoch die auf die magnetorheologischen Fluide einwirkenden Druckkräfte zu groß, zerbrechen die in einem Magnetfeld gebildeten Ketten, so dass den übertragbaren Kräften Grenzen gesetzt sind.

Aus der DE 927 058 C ist eine elektromagnetische Doppelkupplung bekannt, bei der mindestens drei gleichachsig zueinanderliegende Kupplungsteile mit zwei magnetischen Kreisen vorgesehen sind, deren Spulen getrennt auf je einem Primärkupplungsteil angeordnet sind, wobei die die Spulen tragenden, in entgegengesetzter Drehrichtung angetriebenen Primärkupplungsteile axial ineinandergreifen und innerhalb des zwischen ihnen befindlichen Ringraums der dritte als Holzylinder ausgebildete Sekundärteil angeordnet ist, der den magnetischen Rückschluß für die beiden magnetischen Kreise bildet.

Die EP 0 940 286 A2 erläutert ein Kraftfahrzeug-Verteilergetriebe, bei dem eine Kraftübertragung über mit einem magnethorheologischen Fluid gefüllte Ringspalte zwischen ineinandergreifende, wechselnd einer Antriebs- bzw. Abtriebswelle zugeordneten Zylindern erfolgt.

Vor diesem technischen Hintergrund macht die Erfindung es sich zur Aufgabe, eine Vorrichtung für eine Übertragung von Drehmomenten zur Verfügung zu stellen, bei der über elektrische wie auch magnetische, felderregte Kräfte in einem magnetorheologischen Medium auch vergleichsweise große Kräfte übertragen werden können, die insbesondere schleifringlos ausgebildet auch der Erzeugung von Drehmomenten dienen kann und die darüber hinaus mechanisch einfach gestaltet ist.

Gelöst wird diese technische Problematik bei einer Vorrichtung für eine Übertragung und/oder Erzeugung von Drehmomenten, mit einer Antriebswelle und mit einer Abtriebswelle, auf die felderregte Kräfte in einem magnetorheologischen Medium einwirken, gemäß des Anspruchs 1 u.a. durch die Maßnahmen, dass die Antriebswelle in einem Gehäuse in einem Flansch endet, dass auf dem Flansch wenigstens ein Zylinder angeordnet ist und dass der Zylinder koaxial unter Ausbildung eines mit dem magnetorheologischen Mediums gefüllten Spalts die Abtriebswelle übergreift.

Die Vorrichtung nach der Erfindung lässt sich in vorteilhafter Weise als Motor für eine Drehmomenterzeugung durch ein Anlegen elektrischer Felder verwenden, aber auch als drehmomentbelastbarer Generator, so dass die hier durchgängig verwendeten Bezeichnungen Antriebs- und Abtriebswelle hinsichtlich ihrer Funktion nach der ausgewählten Betriebsart zu vertauschen sind.

Ein wesentlicher Vorteil ist weiter, dass die wirksamen Zylinderflächen des mit dem magnetorheologischen Mediums gefüllten Spalts sowohl axial als auch radial vergleichsweise groß ausgebildet werden können, so dass bereits durch solche einfachen Maßnahmen ausreichend große Drehmomente übertragen werden können.

Insbesondere ist dabei daran gedacht, dass die Antriebswelle und Abtriebswelle in dem Gehäuse jeweils in einem runden Flansch eines Rotors endet, dass auf jedem Flansch wenigstens ein Zylinder angeordnet ist und dass die Zylinder koaxial unter Ausbildung des mit dem magnetorheologischen Mediums gefüllten Spalts ineinander greifen. Durch diese Maßnahme wird ein Spalt exakt definiert. Tritt eine Relativgeschwindigkeit zwischen den Zylindern auf, erfolgt eine Scherung der magnetorheologischen Flüssigkeit zwischen den Zylinderoberflächen, die bei Anlegen eines geeigneten elektromagnetischen Feldes durch die auftretende Viskositätsänderung einstellbar ist.

Wird ein Drehfeld angelegt, kann erreicht werden, dass ein Drehmoment sowohl an der Antriebs- als auch an der Abtriebswelle bereit gestellt werden kann.

Für das Erzeugen eines anzulegenden elektromagnetischen Feldes ist weiter vorgesehen, dass durch das Gehäuse ein in das Gehäuseinneren weisender, von der Antriebswelle durchsetzter Kern ausgebildet wird, der in weiterer, konstruktiver Ausgestaltung einen Felderzeuger trägt. Diese Maßnahme erlauben einen schleifringlose Ausbildung der Vorrichtung nach der Erfindung, da der Felderzeuger problemlos durch das Gehäuse der Vorrichtung elektrisch verschaltet werden kann.

Dieser Kern mit insbesondere dem Felderzeuger wird erfindungsgemäß von den Zylindern übergriffen, womit sichergestellt ist, dass der mit dem magnetorheologischen Medium gefüllte Spalt optimal im Einflussbereich des magnetischen Feldes des Felderzeugers befindlich ist.

Weitere konstruktive Maßnahmen sehen vor, dass zwischen dem inneren Felderzeuger und einem radial innenliegenden Zylinder des Rotors der Abtriebswelle ein innerer Luftspalt angeordnet ist und/oder dass zwischen einem radial außenliegenden Zylinder des Rotors der Antriebswelle und dem Gehäuse ein äußerer Luftspalt angeordnet ist.

Damit erfolgt eine Kopplung des Rotors der Antriebswelle mit dem Rotor der Abtriebswelle ausschließlich über den mit einem magnetorheologischen Medium gefüllten Spalt zwischen den beiden Zylindern der Rotoren.

Neben der einfachen, geometrischen Vergrößerung der wirksamen Spaltflächen durch axiale Streckung oder Vergrößerung der Radien kann die wirksame Spaltfläche durch die Maßnahme erhöht werden, dass jeder Flansch mehrere koaxial angeordnete Zylinder aufweist und dass die Zylinder unter Ausbildung mehrerer mit dem magnetorheologischen Medium gefüllten Spalten ineinander greifen.

Damit ergibt sich vorzugsweise ein Aufbau, der in einem axialen Längsschnitt von innen nach außen einen inneren Luftspalt zwischen dem Kern und/oder einem Felderzeuger und einem radial innen liegenden Zylinders des Rotors der Abtriebswelle aufweist, dann zwischen dem radial innen liegenden Zylinder des Rotors der Abtriebswelle und einem radial innen liegenden Zylinder des Rotors der Antriebswelle einen mit magnetorheologischen Medium gefüllten Spalt aufweist, nachfolgend einen wiederum mit einem magnetorheologischen Medium gefüllten Spalt zwischen dem radial innen liegenden Zylinder des Rotors der Antriebswelle und einem radial außen liegenden Zylinder des Rotors der Abtriebswelle und sofort bis hin zu einem äußeren Luftspalt zwischen einem radial außen liegenden Zylinder des Rotors der Abtriebswelle und einem Gehäuse.

Zweckmäßigerweise sind dabei die Spalten miteinander verbunden, so dass ein ungehinderter Durchtritt des magnetorheologischen Mediums ermöglicht ist.

In konstruktiver Ausgestaltung ist hierzu vorgesehen, dass ein radial innen liegender Zylinder des Rotors der Abtriebswelle an seiner dem Flansch gegenüberliegenden Seite eine Ringscheibe aufweist, auf der Zylinder gegenläufig frei endend angeordnet sind, die dann in Ringspalte zwischen den auf dem Flansch des Rotors der Antriebswelle angeordneten Zylindern eingreifen.

Insbesondere bei derartig kaskadierten, sich in einem axialen Längsschnitt mäanderförmig darstellenden, mit dem magnetorheologischen Medium gefüllten Spalten kann es zweckmäßig sein, einen die Zylinder koaxial außen umgebenden Felderzeuger vorzusehen.

Wird ein innerer und ein äußerer Felderzeuger vorgesehen und ist ferner zwischen dem äußeren Felderzeuger und einem radial außen angeordneten Zylinder des Rotors der Antriebswelle ein mit dem magnetorheologischen Medium gefüllter Spalt vorgesehen, so können radial innen liegende Spalten beispielsweise für Kupplungszwecke und äußere Spalten für ein Abbremsen bei entsprechendem Anlegen magnetischer Felder genutzt werden.

Bei einer alternativen Ausführungsvariante der Vorrichtung nach der Erfindung ist vorgesehen, dass die Abtriebswelle einen einen Felderzeuger tragenden Kern aufweist. In einem derartigen Felderzeuger können induzierte Ströme Magnetfelder hervorrufen oder es kann ggfls. ein solcher Felderzeuger über Schleifringe mit elektrischer Energie versorgt werden.

Bevorzugt wird dabei jedoch, dass ein den Kern mit Felderzeuger überdeckendes, axial sich erstreckendes Gehäusesegment elektrisch isoliert ist, dass das magnetorheologische Medium elektrisch leitfähig ist und mit dem Gehäusesegment in elektrischen Kontakt befindlich ist und dass das magnetorheologischen Medium gegenüber dem übrigen Gehäuse, der Abtriebswelle und der Antriebswelle durch jeweils einen Flansch elektrisch isoliert ist. Für die Isolierung wird dabei zweckmäßigerweise ein elektrisch nicht leitendes und magnetisch niederpermeables Material Verwendung finden.

Bei dieser Ausgestaltung kann bei der Abtriebswelle auf einen Rotor mit Zylinder verzichtet sein, wenn zwischen dem Feldererzeuger auf der Abtriebswelle und einem Zylinder eines Rotors der Antriebswelle sowie zwischen dem leitenden Gehäusesegment und dem Zylinder mit dem elektrisch leitfähigen, magnetorheologischen Medium gefüllte Spalten vorgesehen sind.

Die Ausbildung des oder der Felderzeuger wird durch ihren Einsatz zweckbestimmt sein. Ist eine Drehmomenterzeugung vorgesehen, wird eine solche Wicklung weitgehend den herkömmlichen Rotorwicklungen eines Elektromotors entsprechen. Zweckmäßig wird ein Felderzeuger jedoch mehrere Wicklungspakete aufweisen, die sich axial und/oder radial erstrecken können. Dabei ist ferner bei radial umlaufenden Wicklungspaketen eine axial wechselnde Feldorientierung vorgesehen, wobei Kerne in üblicher Weise ausgeführt sein können, bspw. geblecht oder massiv.

Unabhängig von der Ausführung des Kerns kann weiter vorgesehen werden, dass Felderzeuger aus einem eine magnetische Hysterese aufweisenden Material aufgebaut sind, bspw. ein Kern aus einer eine solche Hysterese aufweisenden ferromagnetischen Legierung. Aufgrund dieser Maßnahme kann ein Haltemoment auch ohne anliegendem elektrischen Feld, stromlos, erzeugt werden.

Für eine weitergehende Optimierung kann vorgesehen sein, dass ein Rotor und/oder ein Zylinder zumindest abschnittsweise aus einem magnetisch anisotropen Material gefertigt ist. Solche anisotrope Magnetwerkstoffe können, geeignet eingessetzt und angeordnet, den magnetischen Fluss in einer Vorzugsrichtung leiten, so dass der nutzbare Betrag der magnetischen Flussdichte bei gleicher Energiezufuhr zum Felderzeuger gesteigert wird.

Weiter kann vorgesehen werden, dass bei axial sich ersteckenden Wicklungspaketen eines Felderzeugers zumindest eine Zylinderfläche mit axial sich erstreckenden Nuten oder bei radial sich ersteckenden Wicklungspaketen eines Felderzeugers zumindest eine Zylinderfläche mit radial umlaufenden Nuten versehen ist. Dabei können die Nuten in eine radial außen liegende Zylinderfläche oder in eine einer Wicklung gegenüber liegenden Zylinderfläche eingebracht sein.

Bei einer zusätzliche oder alternativen Maßnahme ist bei axial sich ersteckenden Wicklungspaketen eines Felderzeugers zumindest ein benachbarter Zylinder mit einer axial sich erstreckenden Reihung von Durchbrechungen oder bei radial sich ersteckenden Wicklungspaketen eines Felderzeugers zumindest ein benachbart Zylinder mit radial umlaufenden Reihung von Durchbrechungen versehen.

Unabhängig von ihrer Orientierung können diese Nuten und/oder Durchbrechungen mit einem niederpermeablen Material aufgefüllt sein.

Die Erfindung wird anhand der Zeichnung näher erläutert, in der lediglich Ausführungsbeispiele schematisch dargestellt sind. In der Zeichnung zeigt:
- Fig. 1:: eine als Kupplung und Antrieb dienende Vorrichtung nach der Erfindung mit einem Felderzeuger in einem axialen Längsschnitt,
- Fig. 2:: eine kaskadierte Ausführung,
- Fig. 3:: eine Ausführung mit zwei Felderzeugern,
- Fig. 4:: eine kaskadierte Ausführungsform,
- Fig. 5:: eine als Kupplung, Bremse und Antrieb dienende Vorrichtung,
- Fig. 6:: eine kaskadierte Ausführungsform,
- Fig. 7:: eine Variante der Vorrichtung nach der Erfindung,
- Fig. 8:: eine als Kupplung und Antrieb dienende Vorrichtung mit nur einem außen liegenden Felderzeuger,
- Fig. 9:: eine kaskadierte Ausführungsform,
- Fig. 10:: eine Kupplung mit einem Felderzeuger auf der Abtriebswelle,
- Fig. 11:: einen radialen Schnitt durch einen Felderzeuger,
- Fig. 12:: die Parallelschaltung eines innen liegenden Felderzeugers,
- Fig. 13:: eine Parallelschaltung eines außen liegenden Felderzeugers,
- Fig. 14:: eine Reihenschaltung eines innen liegenden Felderzeugers und
- Fig. 15:: eine Reihenschaltung eines außen liegenden Felderzeugers.

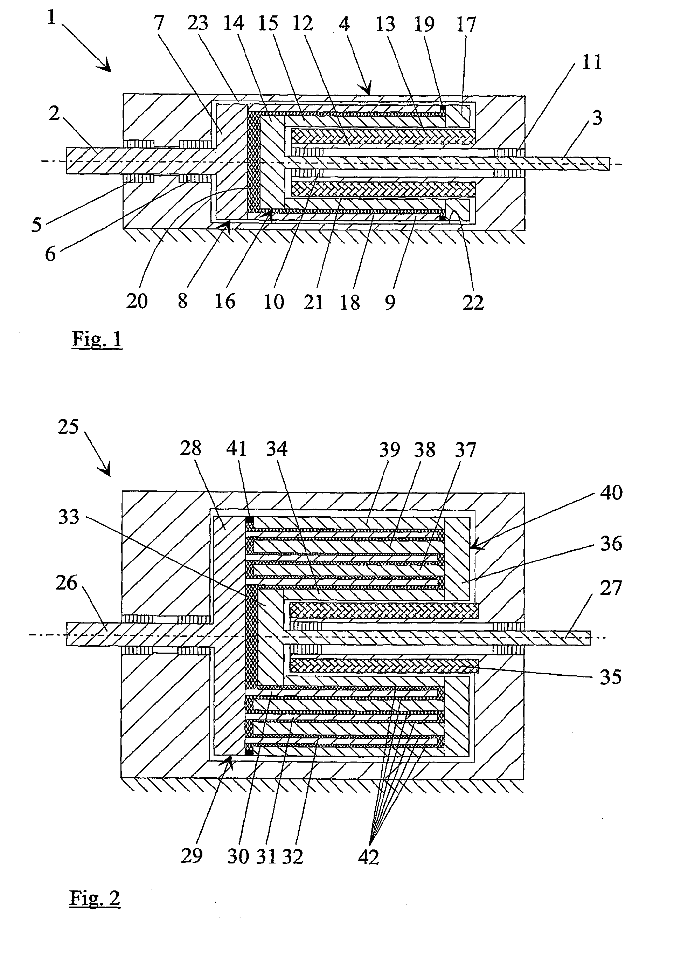

Fig. 1 zeigt in einem axialen Längsschnitt eine Vorrichtung 1 nach der Erfindung, die der Übertragung eines Drehmoments von einer Antriebswelle 2 auf eine Abtriebswelle 3 dient und die auch ein Drehmoment erzeugen kann. Die Antriebswelle 3 ist in einem Gehäuse 4 aus beispielsweise Aluminium drehbar in nur angedeuteten Lagern 5,6 gefangen und bildet innerhalb des Gehäuses 4 einen Flansch 7 eines Rotors 8 aus. Auf diesen Flansch 7 ist ein Zylinder 9 aus einem Stahl, gegebenenfalls aus einem anisotropen Material, aufgesetzt, der die Abtriebswelle 3 übergreift.

Auch die Abtriebswelle 3 ist in einer Durchbrechung in dem Gehäuse 4 in zwei angedeuteten Lagern 10,11 drehbar gefangen. Dabei durchsetzt die Abtriebswelle 3 einen von dem Gehäuse 4 ausgebildeten Kern 12, der radial außen liegend einen Felderzeuger 13 trägt. In dem Gehäuseinneren, koaxial innerhalb des Zylinders 9 des Rotors 8 der Antriebswelle 2, wird von der Abtriebswelle 3 ebenfalls ein Flansch 14 aus beispielsweise einem Aluminium ausgebildet, der einen Zylinder 15 ebenfalls aus einem Stahl, ggfls. aus einem anderen anisotropen Material trägt.

Der Rotor 16 der Abtriebswelle 3 weist an dem dem Flansch 14 gegenüberliegenden Ende des Zylinders 15 eine radial nach außen weisende Ringscheibe 17 auf, die einen verbleibenden Spalt 18 zwischen den Zylindern 9,15 überdeckt und mit einer Dichtung 19 beispielsweise nach Art der bekannten Radialwellendichtring gegen den Zylinder 15 abschließt.

Der Spalt 18 zwischen den Zylindern 9,15 wie auch der Raum 20 zwischen den Flanschen 7,15 ist mit einem magnetorheologischen Medium gefüllt, vorzugsweise einem Carbonyl-Eisenpulver eines Partikeldurchmessers von einigen Mikrometern in einer ölbasierten Trägerflüssigkeit.

Das den Fließwiderstand des magnetorheologischen Mediums verändernde und damit eine einstellbare Drehmomentübertragung zwischen der Antriebswelle 2 und der Abtriebswelle 3 ermöglichende, magnetische Feld wird durch den gehäusefesten Felderzeuger 13 generiert, der auf dem massiv ausgeführten oder geblechten Kern 12 angeordnet ist. Durch diese bauliche Maßnahme kann auf die Verwendung von Schleifringen für eine Energieversorgung des Felderzeugers 13 verzichtet werden.

Bei dem Ausführungsbeispiel gemäß Fig. 1 befindet sich das magnetorheologische Medium ausschließlich in dem Spalt 18 und dem Raum 20. Zwischen dem inneren Felderzeuger 13 und dem Zylinder 15 des Rotors 16 der Abtriebswelle 3 verbleibt ein Luftspalt 21 wie auch zwischen der Gehäuseinnenseite 22 und dem Zylinder 9 des Rotors 8 der Antriebswelle 2 ein Luftspalt 23 verbleibt.

Neben der regelbaren Drehmomentübertragung kann die Vorrichtung 1 für eine Drehmomenterzeugung nach Art eines Elektromotors herangezogen werden. Hierzu ist durch den Felderzeuger 13 ein Drehfeld zu generieren, so dass an- wie abtriebsseitig ein Drehmoment zur Verfügung steht, wobei die Kupplungsfunktion erhalten bleibt. So kann gleichsam zuschaltbar das antriebsseitige Drehmoment verstärkt abtriebsseitig weitergegeben werden. Umgekehrt ist es durch einen generatorischen Betrieb des Felderzeugers 13 möglich, ein Bremsmoment zu erzeugen.

Auch die Vorrichtung 25 nach Fig. 2 dient dem Kuppeln und/oder dem Antrieb einer Antriebswelle 26 und einer Abtriebswelle 27. Der Flansch 28 des Rotors 29 der Antriebswelle 26 trägt drei koaxial angeordnete Zylinder 30 bis 32, wobei der Flansch 28 radial dem äußeren Zylinder 32 vorsteht.

Der Flansch 33 der Abtriebswelle 27 trägt wieder einen Zylinder 34, der einen inneren, gehäusefesten Felderzeuger 35 überdeckt. Auf der dem Flansch 33 gegenüberliegenden Seite trägt der Zylinder 34 eine Ringscheibe 36, auf der drei Zylinder 37 bis 39 koaxial derart angeordnet sind, dass die beiden radial innen liegenden Zylinder 37,38 in die Ringspalte zwischen den gegenüberliegenden Zylinder 30 bis 32 des Rotors 29 der Antriebswelle 26 eingreifen. Der radial außen liegende Zylinder 39 des Rotors 40 der Abtriebswelle 27 schließt mit einer Dichtung 41 gegen den Flansch 28 des Rotors 29 der Antriebswelle 26 ab. Durch diese Maßnahme werden 6 wirksame Spalten 42 geschaffen, die mit einem magnetorheologischen Medium gefüllt sind.

Da die freien Enden der Zylinder 30 bis 32 des Rotors 29 axial von der Ringscheibe 36 des Rotors 40 der Abtriebswelle 27 axial beabstandet sind, stehen diese Spalten 42 untereinander in Verbindung.

Durch eine derartige kaskadierte Wirkung von einer Vielzahl von Spalten 42 lässt sich eine Größe eines zu übertragenden Drehmoments um ein vielfaches steigern.

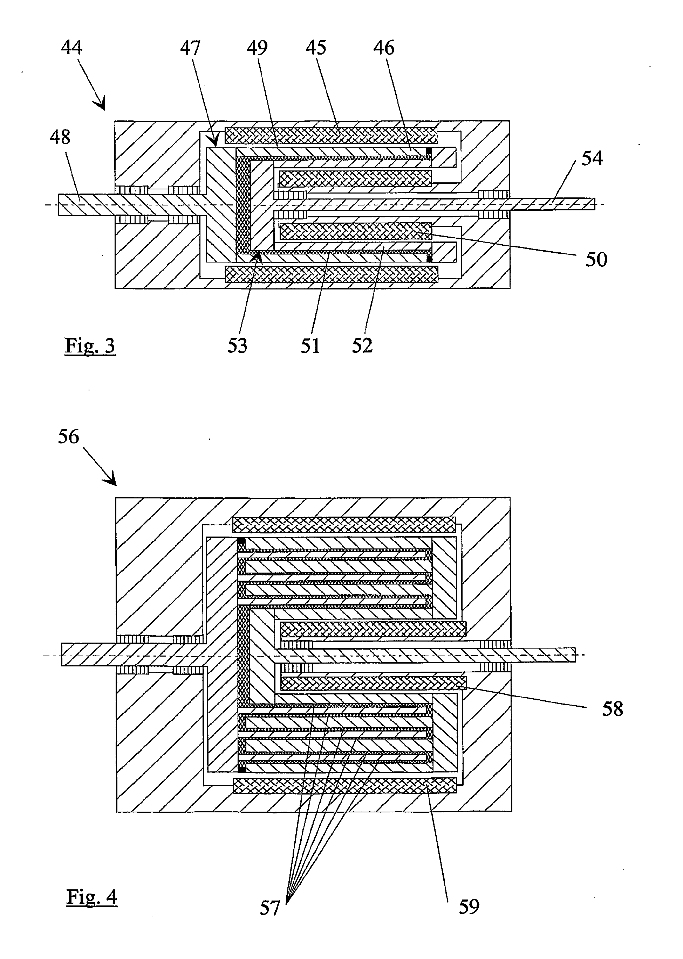

Bei dem Ausführungsbeispiel einer Vorrichtung 44 gemäß Fig. 3 wird die Effektivität der Drehmomentübertragung bzw. der Drehmomenterzeugung durch einen zweiten, äußeren Felderzeuger 45 gesteigert. Zwischen diesem äußeren Felderzeuger 45 und einem radial außenliegenden Zylinder 46 des Rotors 47 einer Antriebswelle 48 verbleibt ein freier Luftspalt 49. Bei gleicher Ausrichtung der magnetischen Felder eines inneren Felderzeugers 50 und des äußeren Felderzeugers 45 wird das magnetisch wirksame Feld über den mit einem magnetorheologischen Medium gefüllten Spalt 51 zwischen dem Zylinder 46 und dem Zylinder 52 eines Rotors 53 einer Abtriebswelle 54 erheblich verstärkt, was eine Erhöhung des übertragbaren Drehmoments bedeutet.

Bei dem Ausführungsbeispiel der Vorrichtung 56 gem. Fig. 4 mit kaskadierten Spalten 57 können ein innerer Felderzeuger 58 und ein äußerer Felderzeuger 59 gleichartige, sich verstärkende Feldorientierungen aufweisen, so dass neben der erhöhten Drehmomentübertragung durch die Kaskadierung der Spalten 57 auch durch eine Erhöhung der magnetischen Feldstärke das zu übertragende Drehmoment nochmals vergrößert wird.

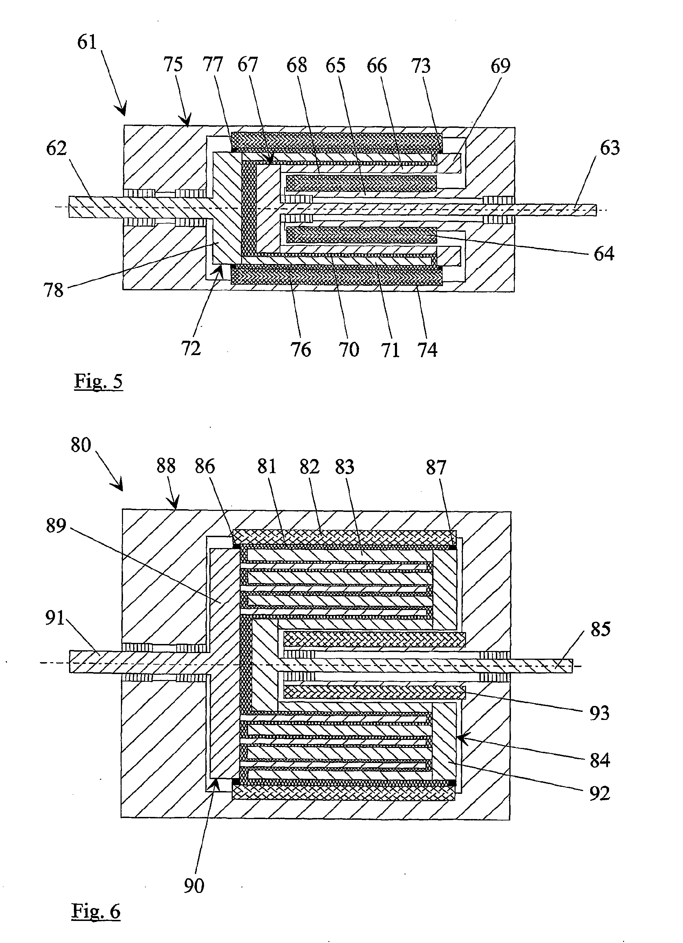

Die Vorrichtung 61 gemäß Fig. 5 dient dem Kuppeln einer Antriebswelle 62 und einer Abtriebswelle 63, dem Bremsen und einem Antrieb. Hierzu ist wiederum ein innerer Felderzeuger 64 auf einem gehäusefesten Kern 65 vorgesehen, der von der Abtriebswelle 63 durchsetzt wird. Zwischen dem inneren Felderzeuger 64 und einem Zylinder 66 eines Rotors 67 der Abtriebswelle 63 ist ein Luftspalt 68 befindlich. Eine Ringscheibe 69 überdeckt einen Spalt 70 zwischen dem Zylinder 66 des Rotors 67 der Abtriebswelle 63 und einem Zylinder 71 eines Rotors 72 der Antriebswelle 62. Bei diesem Ausführungsbeispiel erfolgt eine Abdichtung 73 der Ringscheibe 69 gegen einen äußeren Felderzeuger 74, ggfls. gegen das Gehäuse 75. Hierdurch ist es ermöglicht, dass auch ein Spalt 76 zwischen dem äußeren Felderzeuger 74 und dem radial außenliegenden Zylinder 71 des Rotors 72 der Antriebswelle 62 mit einem magnetorheologischen Medium gefüllt werden kann. Abgedichtet wird dieser Spalt 76 dann durch eine weitere Dichtung 77 zwischen einem Flansch 78 des Rotors 72 und dem äußeren Felderzeuger 74, ggfls. gegen das Gehäuse 75.

Durch diese Maßnahme sind zwei wirksame Spalten 70,76 geschaffen, von denen der radial innen liegende Spalt 70 der Übertragung von Drehmomenten und damit der Kupplung dient, während der radial außen liegende Spalt 76 für eine Bremswirkung herangezogen wird. Für die Bremswirkung wird der veränderliche Fließwiderstand zwischen dem Rotor 72 der Antriebswelle 62 und dem Gehäuse 75 bzw. dem Felderzeuger 74 genutzt. Dabei können sich zum einen gleich orientierte magnetische Felder des inneren Felderzeugers 64 und des äußeren Felderzeugers 74 über die beiden Spalten 70,76 erstrecken als auch gegenläufig orientierte, so dass für eine Kupplungsfunktion das Feld des äußeren Felderzeugers 74 derart eingestellt wird, dass die Wirkung seines Feldes der des inneren Felderzeugers 64 im radial außen liegenden Spalt 76 entgegenwirkt.

Vergleichbares gilt auch bei der Vorrichtung 80 gemäß Fig. 6, bei der bei einer kaskadierten Anordnung von Spalten ein radial außenliegender Spalt 81 zwischen einem äußeren Felderzeuger 82 und einem radial außen liegenden Zylinder 83 eines Rotors 84 einer Abtriebswelle 85 mit einem magnetorheologischen Medium gefüllt ist. Eine Abdichtung dieses radial außen liegenden, für eine Bremswirkung herangezogenen Spalts 81 erfolgt durch Dichtungen 86,87 zwischen dem äußeren Felderzeuger 82, ggfls. dem Gehäuse 88, und dem Flansch 89 des Rotors 90 der Antriebswelle 91 sowie einer Ringscheibe 92 des Rotors 84 der Abtriebswelle 85.

Auch bei diesem Ausführungsbeispiel kann die Orientierung der von dem äußeren Felderzeuger 82 und einem inneren Felderzeuger 93 erzeugten Magnetfelder gleichartig oder entgegengesetzt sein.

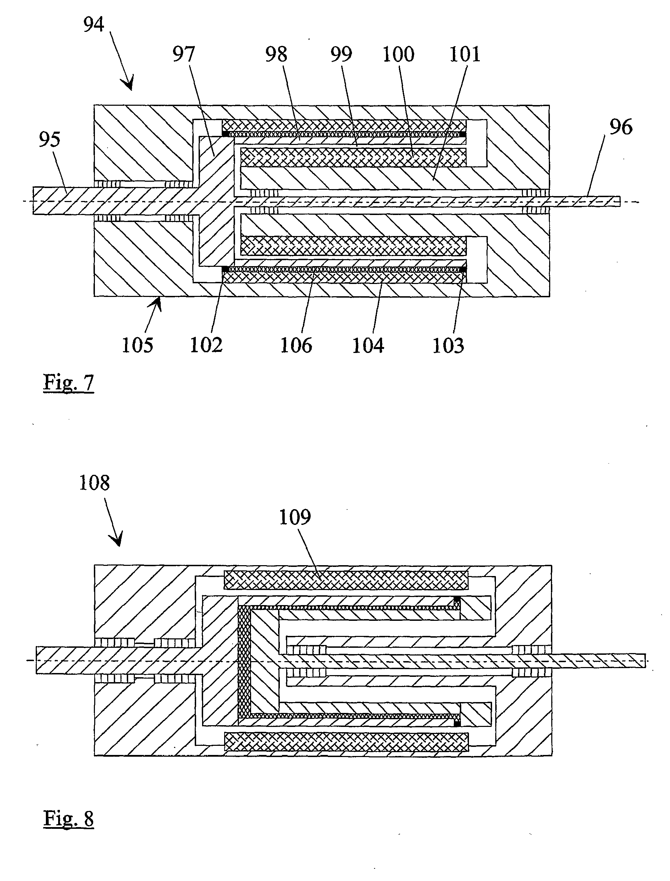

Die Vorrichtung 94 gemäß Fig. 7 weist als Besonderheit eine starre Kopplung zwischen einer Antriebswelle 95 und einer Abtriebswelle 96 auf.

In Folge kann diese Vorrichtung 94 nur einem Abbremsen bzw. Antreiben dienen. Hierzu trägt ein Flansch 97 einen Zylinder 98, der einen Luftspalt 99 belassend einen inneren Felderzeuger 100 auf einem gehäusefesten Kern 101 mit der darin gelagerten Abtriebswelle 96 übergreift. Radial nach außen sind Dichtungen 102,103 gegen einen äußeren Felderzeuger 104, ggfls. gegen ein Gehäuse 105, an dem freien Ende des Zylinders 98 und flanschseitig vorgesehen und ist der hierdurch entstandene Spalt 106 mit einem magnetorheologischen Medium gefüllt.

Bei diesem Ausführungsbeispiel dient der innere Felderzeuger 100 einer Drehmomentbildung in dem Luftspalt 99, wobei dann der äußere Felderzeuger 104 dem magnetischen Fluss des inneren Felderzeugers 100 über den Spalt 106 entgegenwirken kann. Dies ist dann nicht erforderlich, wenn die Wandstärke des Zylinders 98 ausreichend bemessen ist. Im Falle einer Abbremsung können beide Felderzeuger 100,104 zum Aufbau eines Drehmomentes gemeinsam herangezogen werden.

Bei dem Ausführungsbeispiel der Vorrichtung 108 nach Fig. 8 ist ein außenliegender Felderzeuger 109 vorgesehen. Ansonsten entspricht die einer Kupplung und einem Antrieb dienende Vorrichtung 108 der in Fig. 1 dargestellten.

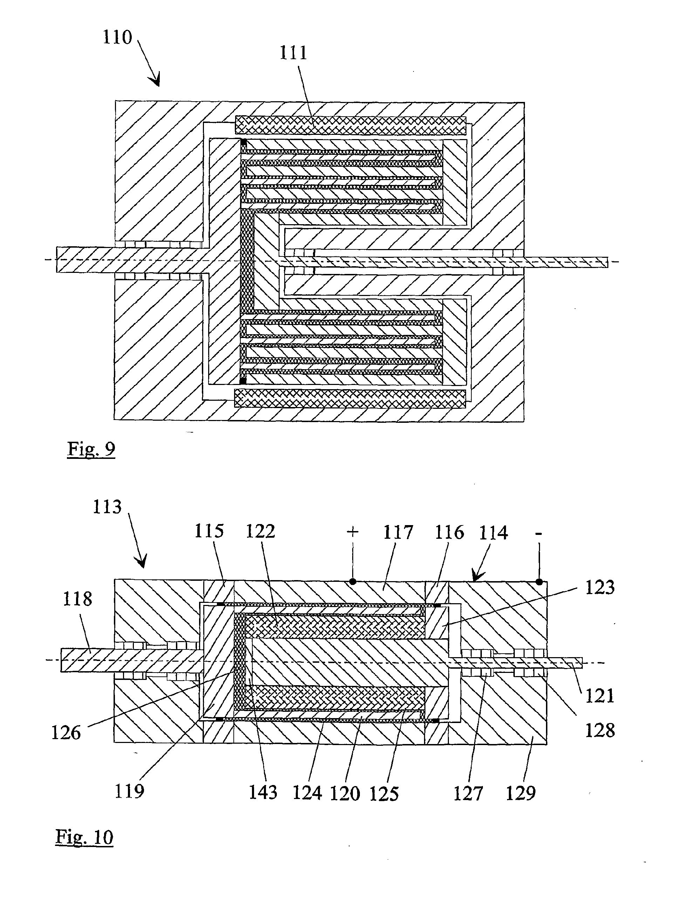

Ebenso entspricht die Vorrichtung 110 gemäß Fig. 9 der anhand der Fig. 2 erläuterten, wobei jedoch auch bei der Vorrichtung 110 ein außenliegender Felderzeuger 111 vorgesehen ist.

Eine weitere Variante einer Vorrichtung 113 nach der Erfindung zeigt Fig. 10. Deren Gehäuse 114 ist durch zwei Isolierungen 115,116, vorzugsweise aus einem niederpermeablen Material, axial geteilt, so dass ein mittleres Gehäusesegment 117 ausgebildet wird. Auch ist eine Antriebswelle 118 mit einem nicht leitenden Flansch 119 versehen, der einen Zylinder 120 aus einem elektrisch leitfähigen Material, beispielsweise aus Stahl, trägt.

Die Abtriebswelle 121 der Vorrichtung 113 trägt einen Felderzeuger 122, einen Flansch 143 und eine Ringscheibe 123, die aus einem elektrisch nicht leitenden, wiederum niederpermeablen Material sind. Der Flansch 119 wie auch die Ringscheibe 123 sind gegen die Isolierungen 115,116 abgedichtet. Aufgrund des axialen Abstands zwischen dem freien Ende des Zylinders 120 und der Ringscheibe 122 entstehen zwei Spalten 124,125 die, wie der Raum 126, durchgängig mit einem magnetorheologischen Medium gefüllt sind.

Dieses magnetorheologische Medium ist elektrisch leitfähig, so dass eine Stromversorgung, angedeutet durch +/-, über das mittlere, leitfähige Gehäusesegment 117 und das elektrisch leitfähige magnetorheologische Medium erfolgt sowie die Abtriebswelle 121, deren Lager 127,128 und das Gehäuseteil 129.

Somit ist auch bei dieser Vorrichtung 113 eine schleifringlose Stromversorgung des mit der Abtriebswelle 121 mit rotierenden Feldererzeugers 122 sichergestellt.

Bei allen Ausführungsbeispielen können die Zylinder aus einem Stahl, gegebenenfalls einem anderen, bspw. einem anisotropen Material als einfache Hohlzylinder mit glatten Oberflächen ausgeführt sein. Es können auch Nuten oder Riefen eingearbeitet sein, die gezielt auf die Strömungsmechanik in den Spalten einwirken als auch eine gezielte magnetische Flussführung ermöglichen können. Auch können spezielle anisotrope Magnetwerkstoffe den magnetischen Fluss in einer Vorzugsrichtung leiten, so dass der nutzbare Betrag der magnetischen Flussdichte bei gleicher Energiezufuhr zum Felderzeuger gesteigert wird.

Der Aufbau der Felderzeuger kann weitestgehend in üblicher Weise erfolgen. So können Wicklungspakete auf einem massiven Kern oder einem geblechten Kern angeordnet sein, wobei bekannte Materialien zum Einsatz kommen können. Werden spezielle magnetische Legierungen verwendet, die remanenzmagnetische Eigenschaften aufweisen, eine steuerbare Restmagnetisierung, kann der Felderzeuger wahlweise einen magnetisierten oder nicht magnetisierten Zustand aufweisen. Es kann dann auch im Fall keiner Energiezufuhr ein Kupplungs- und Bremsmoment aufgebracht werden, wobei sich die Magnetisierung durch den Felderzeuger selbst gezielt verändern lässt.

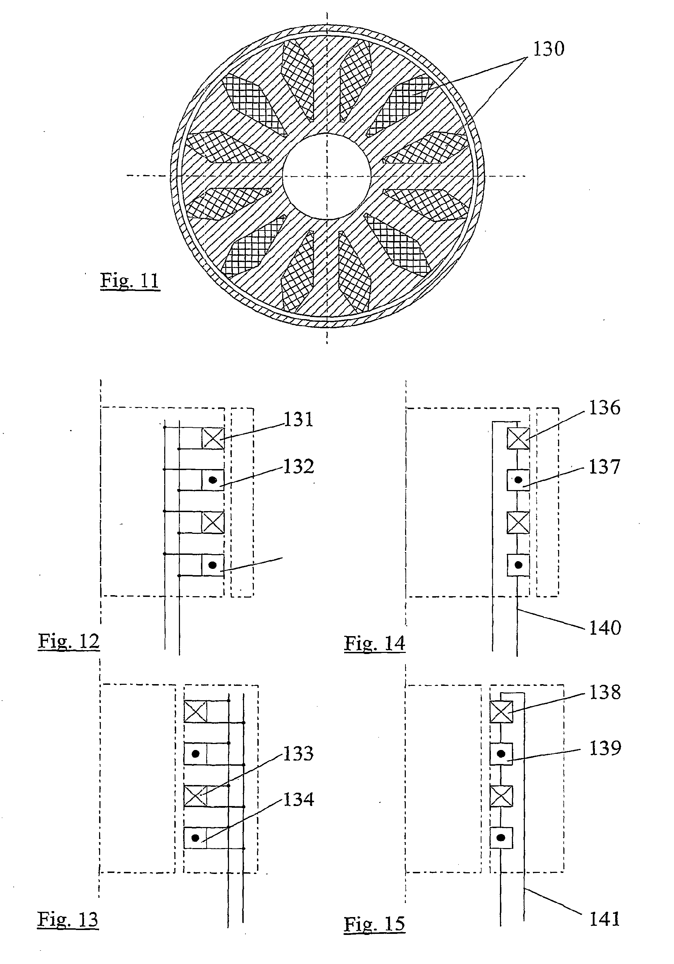

Ist an einen Antrieb durch eine Vorrichtung nach der Erfindung gedacht, gelangt ein Felderzeuger mit axial sich erstreckenden Wicklungen 130, vergleiche Fig. 11, zur Anwendung, dessen Wicklungen 130 im Wesentlichen denen eines Rotors eines herkömmlichen Elektromotors entsprechen.

Die Figuren 12 bis 15 zeigen schematisch radial gewickelte Wicklungspakete. Sind dies einzelne Spulen, können die Wicklungspakete 131,132; 133,134 in Parallelschaltungen sowohl bei einem innen liegenden Felderzeuger gemäß Fig. 12 als auch einem außen liegenden Felderzeuger gemäß Fig. 13 unmittelbar in einer Parallelschaltung betrieben werden, wobei durch die abwechselnde Wicklungsrichtung der Wicklungspakete 131,132 bzw. 133,134 eine axial wechselnde Feldorientierung erreicht wird.

Die Figur 14 zeigt Wicklungspakete 136,137 bei einem innen liegenden Felderzeuger, Fig. 15 Wicklungspakete 138,139 bei einem außen liegenden Felderzeuger, bei denen jeweils ein durchgängiger Wicklungsdraht 140,141 axial eine wechselnde Wickelrichtung aufweist, so dass eine Reihenschaltung entgegengesetzt orientierter Wicklungspakete 136,137 bzw. 138,139 entsteht.

## Patentansprüche

1. Vorrichtung (1) für eine Übertragung und/oder Erzeugung von Drehmomenten, mit einer Antriebswelle (2) und mit einer Abtriebswelle (3), gegenüberliegend die Wände eines Gehäuses (4) durchsetzend angeordnet, auf die felderregte Kräfte eines magnetorheologischen Mediums in einem die Wellen (3,4) trennenden Spalt (18) einwirken, hervorgerufen durch wenigstens einen zu dem Spalt (18) koaxialen Felderzeuger (13), **dadurch gekennzeichnet, dass** die Antriebswelle (2) und die Abtriebswelle (3) in dem Gehäuse (4) drehbar gelagert sind, dass durch das Gehäuse (4) ein in das Gehäuseinnere weisender, von der Abtriebswelle (3) durchsetzter Kern (12) ausgebildet wird, dass die Antriebswelle (2) und die Abtriebswelle (3) jeweils in einem Flansch (7,14) enden, dass auf dem Flansch (14) der Antriebswelle (3) ein Zylinder (15) mit über seine axiale Erstreckung runden Querschnitten aufgesetzt ist und dass der Zylinder (15) koaxial unter Ausbildung eines mit dem magnetorheologischen Mediums gefüllten Spalts (18) die Abtriebswelle (3) und den Kern (12) übergreift.

2. Vorrichtung nach Anspruch 1, **dadurch gekennzeichnet, dass** die Antriebswelle (2) und die Abtriebswelle (3) in dem Gehäuse (4) jeweils in einem runden Flansch (7,14) eines Rotors (8,16) endet, dass auf jedem Flansch (7,14) wenigstens ein Zylinder (9,15) angeordnet ist und dass die Zylinder (9,15) koaxial unter Ausbildung des mit dem magnetorheologischen Mediums gefüllten Spalts (18) ineinander greifen.

3. Vorrichtung nach einem oder mehreren der vorangehenden Ansprüche, **dadurch gekennzeichnet, dass** der Kern (12) von dem Zylinder (15) der Abtriebswelle (3) übergriffen wird.

4. Vorrichtung nach einem oder mehreren der vorangehenden Ansprüche, **dadurch gekennzeichnet, dass** der Kern (12) einen Felderzeuger (13) trägt.

5. Vorrichtung nach einem oder mehreren der vorangehenden Ansprüche, **dadurch gekennzeichnet, dass** zwischen dem inneren Felderzeuger (13) und einem radial innen liegenden Zylinder (15) des Rotors (16) der Abtriebswelle (3) ein innerer Luftspalt (21) vorgesehen ist und/oder dass zwischen einem radial außen liegenden Zylinder (9) des Rotors (8) der Antriebswelle (2) und dem Gehäuse (4) ein äußerer Luftspalt (23) vorgesehen ist.

6. Vorrichtung nach einem oder mehreren der vorangehenden Ansprüche, **dadurch gekennzeichnet, dass** jeder Flansch (28,33) mehrere koaxial angeordnete Zylinder (30-32; 37-39) aufweist und dass die Zylinder (30-32; 37-39) unter Ausbildung mehrerer mit dem magnetorheologischen Medium gefüllten Spalten (42) ineinander greifen.

7. Vorrichtung nach Anspruch 6, **dadurch gekennzeichnet, dass** ein radial innen liegender Zylinder (34) des Rotors (40) der Abtriebswelle (27) an seiner dem Flansch (33) gegenüber liegenden Seite eine Ringscheibe (36) aufweist, auf der Zylinder (37-39) gegenläufig frei endend angeordnet sind.

8. Vorrichtung nach einem oder mehreren der vorangehenden Ansprüche, **dadurch gekennzeichnet, dass** die Zylinder (46,52) koaxial von einem äußeren Felderzeuger (45) umgeben sind.

9. Vorrichtung nach einem oder mehreren der vorangehenden Ansprüche, **dadurch gekennzeichnet, dass** zwischen dem äußeren Felderzeuger (74) und einem radial außen angeordneten Zylinder (71) des Rotors (72) der Antriebswelle (62) ein mit dem magnetorheologischen Medium gefüllter Spalt (76) vorgesehen ist.

10. Vorrichtung nach einem oder mehreren der vorangehenden Ansprüche, **dadurch gekennzeichnet, dass** ein Felderzeuger mehrere Wicklungspakete (131,132) aufweist, die sich axial (130) und/oder radial (131,132) erstrecken.

11. Vorrichtung nach Anspruch 10, **dadurch gekennzeichnet, dass** radial umlaufende Wicklungspakete (131,132) axial wechselnde Feldorientierungen aufweisen.

12. Vorrichtung nach einem oder mehreren der vorangehenden Ansprüche, **dadurch gekennzeichnet, dass** Felderzeuger aus einem eine magnetische Hysterese aufweisenden Material aufgebaut sind.

13. Vorrichtung nach einem oder mehreren der vorangehenden Ansprüche, **dadurch gekennzeichnet, dass** ein Rotor und/oder ein Zylinder zumindest abschnittsweise aus einem magnetisch anisotropen Material gefertigt ist.

14. Vorrichtung nach einem oder mehreren der vorangehenden Ansprüche, **dadurch gekennzeichnet, dass** bei axial sich ersteckenden Wicklungspaketen eines Felderzeugers zumindest eine Zylinderfläche mit axial sich erstreckenden Nuten oder bei radial sich ersteckenden Wicklungspaketen eines Felderzeugers zumindest eine Zylinderfläche mit radial umlaufenden Nuten versehen ist.

15. Vorrichtung nach Anspruch 14, **dadurch gekennzeichnet, dass** die Nuten in eine radial außen liegende Zylinderfläche eingebracht sind und/oder dass die Nuten in eine einer Wicklung gegenüber liegenden Zylinderfläche eingebracht sind.

## Claims

1. A device (1) for a transmission and/or generation of torques, with a drive shaft (2) and with an output shaft (3), arranged lying opposite penetrating the walls of a housing (4), onto which field-excited forces of a magnetorheological medium act in a gap (18) separating the shafts (3, 4), brought about by at least one field generator (13) coaxial to the gap (18), **characterized in that** the drive shaft (2) and the output shaft (3) are rotatably mounted in the housing (4), that through the housing (4) a core (12) pointing into the interior of the housing and penetrated by the output shaft (3) is formed, that the drive shaft (2) and the output shaft (3) terminate respectively in a flange (7, 14), that on the flange (14) of the drive shaft (3) a cylinder (15) is placed having round cross-sections over its axial extent, and that the cylinder (15) overlaps the output shaft (3) and the core (12) coaxially with the formation of a gap (18) which is filled with the magnetorheological medium.

2. The device according to claim 1, **characterized in that** the drive shaft (2) and the output shaft (3) in the housing (4) terminates respectively in a round flange (7, 14) of a rotor (8, 16), that on each flange (7, 14) at least one cylinder (9, 15) is arranged and that the cylinders (9, 15) engage into one another coaxially with the formation of the gap (18) which is filled with the magnetorheological medium.

3. The device according to one or more of the preceding claims, **characterized in that** the core (12) is overlapped by the cylinder (15) of the output shaft (3).

4. The device according to one of more of the preceding claims, **characterized in that** the core (12) carries a field generator (13).

5. The device according to one or more of the preceding claims, **characterized in that** an inner air gap (21) is provided between the inner field generator (13) and a cylinder (15) of the rotor (16) of the output shaft (3) lying radially on the interior, and/or that an outer air gap (23) is provided between a cylinder (9) of the rotor (8) of the drive shaft (2) lying radially on the exterior and the housing (4).

6. The device according to one or more of the preceding claims, **characterized in that** each flange (28, 33) has several coaxially arranged cylinders (30-32; 37-39) and that the cylinders (30-32; 37-39) engage into one another with the formation of several gaps (42) which are filled with the magnetorheological medium.

7. The device according to claim 6, **characterized in that** a cylinder (34) of the rotor (40) of the output shaft (27) lying radially on the interior has on its side lying opposite the flange (33) an annular disc (36), on which cylinders (37-39) are arranged ending freely in opposite directions.

8. The device according to one or more of the preceding claims, **characterized in that** the cylinders (46, 52) are surrounded coaxially by an external field generator (45).

9. The device according to one or more of the preceding claims, **characterized in that** a gap (76) filled with the magnetorheological medium is provided between the external field generator (74) and a cylinder (71) of the rotor (72) of the drive shaft (62) arranged radially on the exterior.

10. The device according to one or more of the preceding claims, **characterized in that** a field generator has several winding assemblies (131, 132), which extend axially (130) and/or radially (131, 132).

11. The device according to claim 10, **characterized in that** radially circumferential winding assemblies (131, 132) have axially alternating field orientations.

12. The device according to one or more of the preceding claims, **characterized in that** field generators are constructed from a material having a magnetic hysteresis.

13. The device according to one or more of the preceding claims, **characterized in that** a rotor and/or a cylinder is manufactured at least partially from a magnetically anisotropic material.

14. The device according to one or more of the preceding claims, **characterized in that** in the case of axially extending winding assemblies of a field generator, at least one cylinder surface is provided with axially extending grooves, or in the case of radially extending winding assembles of a field generator, at least one cylinder surface is provided with radially circumferential grooves.

15. The device according to claim 14, **characterized in that** the grooves are introduced into a cylinder surface lying radially on the exterior and/or that the grooves are introduced into a cylinder surface lying opposite a winding.

## Revendications

1. Dispositif (1) pour une transmission et/ou production de couples de rotation, comprenant un arbre primaire (2) et un arbre secondaire (3), disposés l'un en face de l'autre en traversant les parois d'un carter (4), sur lesquels des forces à excitation de champ d'un agent magnétorhéologique agissent dans une fente (18) séparant les arbres (3, 4), provoquées par au moins un générateur de champ (13) coaxial à la fente (18), **caractérisé en ce que** l'arbre primaire (2) et l'arbre secondaire (3) sont positionnés de façon rotative dans le carter (4), qu'un noyau (12) orienté vers l'intérieur du carter et traversé par l'arbre secondaire (3) est formé par le carter (4), que l'arbre primaire (2) et l'arbre secondaire (3) terminent respectivement dans une bride (7, 14), qu'un cylindre (15) avec des sections transversales rondes sur son extension axiale est disposé sur la bride (14) de l'arbre secondaire (3) et que le cylindre (15) met en prise l'arbre secondaire (3) et le noyau (12) coaxialement par la formation d'une fente (18) remplie de l'agent magnétorhéologique.

2. Dispositif selon la revendication 1, **caractérisé en ce que** l'arbre primaire (2) et l'arbre secondaire (3) terminent dans le carter (4) respectivement dans une bride ronde (7, 14) d'un rotor (8, 16), que sur chaque bride (7, 14) est disposé au moins un cylindre (9, 15) et que les cylindres (9, 15) se mettent en prise l'un dans l'autre coaxialement par la formation de la fente (18) remplie de l'agent magnétorhéologique.

3. Dispositif selon l'une ou plusieurs des revendications précédentes, **caractérisé en ce que** le noyau (12) est recouvert par le cylindre (15) de l'arbre secondaire (3).

4. Dispositif selon l'une ou plusieurs des revendications précédentes, **caractérisé en ce que** le noyau (12) porte un générateur de champ (13).

5. Dispositif selon l'une ou plusieurs des revendications précédentes, **caractérisé en ce qu'**un entrefer intérieur (21) est prévu entre le générateur de champ intérieur (13) et un cylindre radial intérieur (15) du rotor (16) de l'arbre secondaire (3) et/ou qu'un entrefer extérieur (23) est prévu entre un cylindre radial extérieur (9) du rotor (8) de l'arbre primaire (2) et le carter (4).

6. Dispositif selon l'une ou plusieurs des revendications précédentes, **caractérisé en ce que** chaque bride (28, 33) présente plusieurs cylindres coaxiaux (30 - 32 ; 37 - 39) et que les cylindres (30 - 32 ; 37 - 39) se mettent en prise l'un dans l'autre en formant plusieurs fentes (42) remplies de l'agent magnétorhéologique.

7. Dispositif selon la revendication 6, **caractérisé en ce qu'**un cylindre radial intérieur (34) du rotor (40) de l'arbre secondaire (27) présente une rondelle (36) sur son côté opposé à la bride (33), sur laquelle des cylindres (37 - 39) sont disposés en terminant opposés librement.

8. Dispositif selon l'une ou plusieurs des revendications précédentes, **caractérisé en ce que** les cylindres (46, 52) sont coaxialement entourés par un générateur de champ extérieur (45).

9. Dispositif selon l'une ou plusieurs des revendications précédentes, **caractérisé en ce qu'**une fente (76) remplie de l'agent magnétorhéologique est prévue entre le générateur de champ extérieur (74) et un cylindre radial extérieur (71) du rotor (72) de l'arbre primaire (62).

10. Dispositif selon l'une ou plusieurs des revendications précédentes, **caractérisé en ce qu'**un générateur de champ présente plusieurs paquets de bobinage (131, 132) qui s'étendent axialement (130) et/ou radialement (131, 132).

11. Dispositif selon la revendication 10, **caractérisé en ce que** des paquets de bobinage au parcours radial (131, 132) présentent des orientations de champ axiales en alternance.

12. Dispositif selon l'une ou plusieurs des revendications précédentes, **caractérisé en ce que** des générateurs de champ sont fabriqués dans un matériau présentant une hystérèse magnétique.

13. Dispositif selon l'une ou plusieurs des revendications précédentes, **caractérisé en ce qu'**un rotor et/ou un cylindre est/sont fabriqué(s), au moins par tronçons, dans un matériau anisotrope magnétique.

14. Dispositif selon l'une ou plusieurs des revendications précédentes, **caractérisé en ce qu'**avec des paquets de bobinage d'un générateur de champ s'étendant axialement, au moins une surface de cylindre est dotée de rainures s'étendant axialement, ou qu'avec des paquets de bobinage d'un générateur de champ s'étendant radialement, au moins une surface de cylindre est dotée de rainures au parcours radial.

15. Dispositif selon la revendication 14, **caractérisé en ce que** les rainures sont pratiquées dans une surface de cylindre radiale extérieure et/ou que les rainures sont disposées dans une surface de cylindre opposée à un bobinage.
